# EUROPEAN PATENT APPLICATION

(11) **EP 4 645 910 A1**
(43) Date of publication of application: **05.11.2025**
(21) Application number: 22969590.3
(22) Date of filing: 28.12.2022
(51) Int. Cl.: H04W 4/02

(54) **INFORMATION TRANSMISSION METHOD AND APPARATUS, AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Gunzelmann, Rainer
(86) International application number: PCT/CN2022/142925
(87) International publication number: WO 2024/138438

(57) **Abstract**

Provided in the present disclosure are an information transmission method and apparatus, and a storage medium. The method comprises: sending region information to a terminal, wherein the region information comprises geographical location information of a region and at least one of the following: a region identifier, and indication information for indicating a network type to which the region belongs. In the present disclosure, a network-side device can send region information to a terminal, such that the terminal can accurately determine a TN region on the basis of the region information, measure the TN frequency when located within the TN region, and not measure the TN frequency when located beyond the TN region, thereby effectively reducing the energy consumption of the terminal.

## Description

### FIELD

The present disclosure relates to a field of communication technologies, in particular to an information transmission method and apparatus and a storage medium.

### BACKGROUND

At present, frequencies of a non-terrestrial network (NTN) and a terrestrial network (TN) may be the same or different. For a terminal, when it is reselected from an NTN cell to a TN cell, an intra-frequency measurement and an inter-frequency measurement may be carried out. Moreover, for the cell reselection between the NTN cell and the TN cell, a network device may configure the frequency of the TN with a higher priority, and UE needs to measure the frequency of the TN first.

When a serving cell of the terminal is an NTN cell, considering a large coverage area of the NTN cell, there may be no TN cell in the NTN cell, or there may be few TN cells in the NTN cell, that is, there may be no TN cell around the terminal. In a case that the network device configures the frequency of the TN with a higher priority, according to the current agreement, even if there is no TN cell around the terminal, the terminal still needs to measure the frequency of the TN, thus increasing the unnecessary power consumption of the terminal.

### SUMMARY

In order to overcome the problems existing in the related art, embodiments of the present disclosure provide an information transmission method, an information transmission apparatus and a storage medium.

According to a first aspect of embodiments of the present disclosure, there is provided an information transmission method, which is performed by a terminal and includes:
sending area information to a terminal, wherein the area information includes area geographic location information and at least one of:
an area identifier; or
indication information indicating a network type to which an area belongs.

Optionally, the indication information is implicit indication information.

Optionally, each area information is associated with at least one frequency information.

Optionally, the method further includes:
sending association information between the area information and the at least one frequency information to the terminal.

Optionally, sending the association information to the terminal includes:
sending a neighbour cell list to the terminal, wherein each cell contained in the neighbour cell list is associated with any one of the area information; and/or
sending a frequency list to the terminal, wherein each frequency contained in the frequency list is associated with any one of the area information.

Optionally, sending the association information to the terminal includes:
sending a neighbour cell list to the terminal, wherein each designated cell contained in the neighbour cell list is associated with any one of the area information, and the designated cell is a terrestrial network (TN) cell; and/or
sending a frequency list to the terminal, wherein each designated frequency contained in the frequency list is associated with any one of the area information, and the designated frequency is a frequency applied only to a TN.

Optionally, sending the area information and the association information to the terminal includes:
sending the area geographic location information to the terminal, wherein each area geographic location information is associated with at least one frequency; or
sending the area geographic location information to the terminal, wherein each area geographic location information is associated with at least one designated frequency, and the at least one designated frequency is a frequency applied only to a TN.

According to a second aspect of embodiments of the present disclosure, there is provided an information transmission method, which is performed by a terminal and includes:
receiving area information sent by a network device, wherein the area information includes area geographic location information and at least one of:
an area identifier; or
indication information indicating a network type to which an area belongs.

Optionally, the indication information is implicit indication information.

Optionally, each area information is associated with at least one frequency information.

Optionally, the method further comprises:
receiving association information between the at least one frequency information and the area information sent by the network device.

Optionally, receiving the association information sent by the network device includes:
receiving a neighbour cell list sent by the network device, wherein each cell contained in the neighbour cell list is associated with any one of the area information; and/or
receiving a frequency list sent by the network device, wherein each frequency contained in the frequency list is associated with any one of the area information.

Optionally, receiving the association information sent by the network device includes:
receiving a neighbour cell list sent by the network device, wherein each designated cell contained in the neighbour cell list is associated with any one of the area information, and the designated cell is a terrestrial network (TN) cell; and/or
receiving a frequency list sent by the network device, wherein each designated frequency contained in the frequency list is associated with any one of the area information, and the designated frequency is a frequency applied only to a TN.

Optionally, receiving the area information and the association information sent by the network device includes:
receiving the area geographic location information sent by the network device, wherein each area geographic location information is associated with at least one frequency; or
receiving the area geographic location information sent by the network device, wherein each area geographic location information is associated with at least one designated frequency, and the designated frequency is a frequency applied only to a TN.

Optionally, the method further includes:
in a case that the terminal is in one of areas indicated by the area information, according to a frequency and/or a cell associated with the area identifier, determining to measure the frequency and/or the cell; or
in a case that the terminal is outside areas indicated by the area information, according to a frequency and/or a cell associated with the area identifier, determining not to measure the frequency and/or the cell.

Optionally, the method further includes:
in a case that the terminal is in one of areas indicated by the area information, and the indication information corresponding to the area indicates that the network type is a TN, according to a frequency and/or a cell associated with the indication information, determining to measure the frequency and/or the cell; or
in a case that the terminal is outside areas indicated by the area information, and the indication information corresponding to the area indicates the network type a TN, according to a frequency and/or a cell associated with the indication information, determining not to measure the frequency and/or the cell.

Optionally, the method further includes:
in a case that the terminal is in one of areas indicated by the area information, according to a frequency associated with the area geographic location information, determining to measure the frequency; or
in a case that the terminal is outside areas indicated by the area information, according to a frequency associated with the area geographic location information, determining not to measure the frequency.

According to a third aspect of embodiments of the present disclosure, there is provided an information transmission apparatus, which is applied to a base station and includes:
a sending module configured to send area information to a terminal, wherein the area information includes area geographic location information and at least one of:
an area identifier; or
indication information indicating a network type to which an area belongs.

According to a fourth aspect of embodiments of the present disclosure, there is provided an information transmission apparatus, which is applied to a terminal and includes:
a receiving module configured to receive area information sent by a network device, wherein the area information includes area geographic location information and at least one of:
an area identifier; or
indication information indicating a network type to which an area belongs.

According to a fifth aspect of embodiments of the present disclosure, a computer-readable storage medium is provided, and the storage medium stores a computer program for performing any one of the information transmission methods described above at the side of the terminal.

According to a sixth aspect of embodiments of the present disclosure, a computer-readable storage medium is provided, and the storage medium stores a computer program for performing any one of the information transmission methods described above at the side of the network device.

According to a seventh aspect of embodiments of the present disclosure, there is provided an information transmission apparatus, including:
a processor; and
a memory for storing instructions executable by the processor.

The processor is configured to perform any one of the information transmission methods described above at the side of the terminal.

According to an eighth aspect of embodiments of the present disclosure, there is provided an information transmission apparatus, including:
A processor; and
a memory for storing instructions executable by the processor.

The processor is configured to perform any one of the information transmission methods described above at the side of the network device.

The technical scheme provided by the embodiments of the present disclosure may include the following beneficial effects.

In the embodiments of the present disclosure, the network device may send the area information to the terminal, so that the terminal may accurately determine the TN area based on the area information, and the terminal measures the TN frequency when it is in the TN area, and does not measure the TN frequency when it is outside the TN area, thus effectively reducing the energy consumption of the terminal.

It is to be understood that both the foregoing general description and the following detailed description are illustrative and explanatory only, and are not restrictive of the present disclosure.

### BRIEF DESCRIPTION OF THE DRAWINGS

The accompanying drawings, which are incorporated in and constitute a part of this specification, illustrate embodiments consistent with the present disclosure and together with the description, serve to explain the principles of the present disclosure.
Fig. 1 is a flow chart of an information transmission method according to an illustrative embodiment.
Fig. 2 is a flow chart of another information transmission method according to an illustrative embodiment.
Fig. 3A is a flow chart of another information transmission method according to an illustrative embodiment.
Fig. 3B is a flow chart of another information transmission method according to an illustrative embodiment.
Fig. 4A is a flow chart of another information transmission method according to an illustrative embodiment.
Fig. 4B is a flow chart of another information transmission method according to an illustrative embodiment.
Fig. 5A is a flow chart of another information transmission method according to an illustrative embodiment.
Fig. 5B is a flow chart of another information transmission method according to an illustrative embodiment.
Fig. 6A is a flow chart of another information transmission method according to an illustrative embodiment.
Fig. 6B is a flow chart of another information transmission method according to an illustrative embodiment.
Fig. 6C is a flow chart of another information transmission method according to an illustrative embodiment.
Fig. 7 is a flow chart of another information transmission method according to an illustrative embodiment.
Fig. 8 is a flow chart of another information transmission method according to an illustrative embodiment.
Fig. 9A is a flow chart of another information transmission method according to an illustrative embodiment.
Fig. 9B is a flow chart of another information transmission method according to an illustrative embodiment.
Fig. 10A is a flow chart of another information transmission method according to an illustrative embodiment.
Fig. 10B is a flow chart of another information transmission method according to an illustrative embodiment.
Fig. 11A is a flow chart of another information transmission method according to an illustrative embodiment.
Fig. 11B is a flow chart of another information transmission method according to an illustrative embodiment.
Fig. 12A is a flow chart of another information transmission method according to an illustrative embodiment.
Fig. 12B is a flow chart of another information transmission method according to an illustrative embodiment.
Fig. 12C is a flow chart of another information transmission method according to an illustrative embodiment.
Fig. 13 is a flow chart of another information transmission method according to an illustrative embodiment.
Fig. 14 is a block diagram of an information transmission apparatus according to an illustrative embodiment.
Fig. 15 is a block diagram of another information transmission apparatus according to an illustrative embodiment.
Fig. 16 is a schematic diagram of an information transmission apparatus according to an illustrative embodiment of the present disclosure.
Fig. 17 is a schematic diagram of another information transmission apparatus according to an illustrative embodiment of the present disclosure.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all the implementations consistent with the present disclosure. Rather, they are merely examples of apparatuses and methods consistent with some aspects of the present disclosure as detailed in the appended claims.

The terms used in the present disclosure are for the purpose of describing specific embodiments only and are not intended to limit the present disclosure. The singular forms "a", "the" and "said" used in the present disclosure and the appended claims are also intended to include the plural forms, unless the context clearly indicates other meaning. It should also be understood that the term "and/or" as used herein refers to and includes any or all possible combinations of at least one associated listed item.

It should be understood that although the terms first, second, third, etc. may be used to describe various information in the present disclosure, these information should not be limited to these terms. These terms are only used to distinguish the same type of information from each other. For example, without departing from the scope of the present disclosure, the first information may also be called the second information, and similarly, the second information may also be called the first information. Depending on the context, the word "if" as used herein may be interpreted as "when" or "while" or "in response to determining... ".

Next, an information transmission method provided by the present disclosure will be introduced from a side of a network device first.

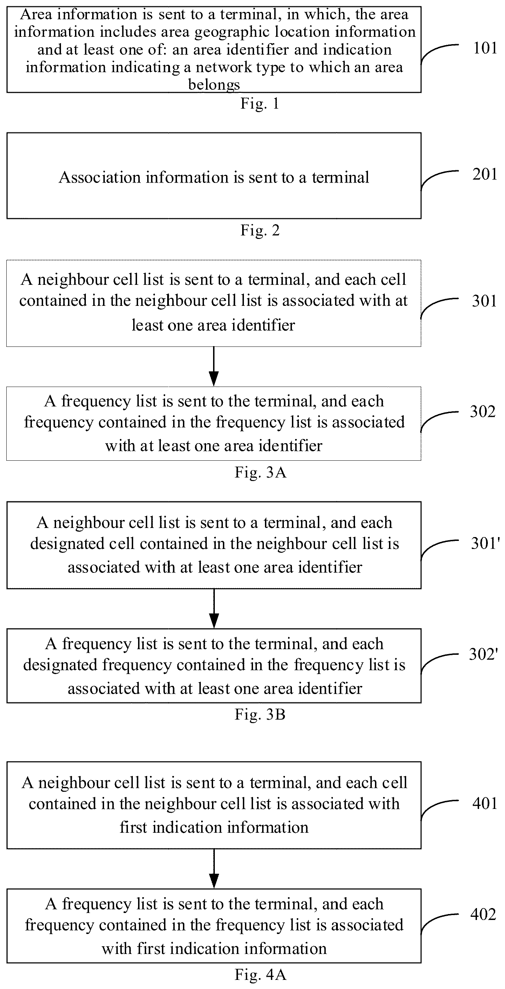

An embodiment of the present disclosure provides an information transmission method, as shown in Fig. 1, which is a flow chart of an information transmission method according to an embodiment, the information transmission method may be performed by the network device, and the network device includes, but is not limited to, a base station and a core network device in an NTN. The method may include the following steps.

In step 101, area information is sent to a terminal.

In the embodiment of the present disclosure, the area information includes area geographic location information and at least one of: an area identifier and indication information indicating a network type to which an area belongs.

The area information here may be area information of a TN area.

In the embodiment of the present disclosure, the area geographic location information may include geographic location information of a center point of each area and a radius of each area.

The terminal may take the center point as a center of a circle, determine a circular area with the corresponding radius, and determine the circular area as an area, which may be a TN area.

Alternatively, the area geographic location information may include geographic location information of a plurality of location points located on a boundary of each area.

The terminal may connect the plurality of location points through a straight line to obtain an area, and determine the obtained area as the area, which may be the TN area.

The above description is only illustrative, and the area geographic location information may include other information for determining a geographic location of the area, which is not limited by the present disclosure.

In the embodiment of the present disclosure, the area identifier is information for identifying each area. For example, the network device may assign an area identifier to each area, and the area identifier may be sequentially increased from 0 or 1.

In the embodiment of the present disclosure, the indication information may be implicit indication information. That is, the network device will not send the indication information through a separate signaling, but may send the indication information implicitly while sending other information, and the terminal will determine the content of the indication information.

For example, the network device only provides the area information of one network type, and the network type is the TN, which is agreed upon by protocol. That is, there is no separate signaling to indicate whether the area is a TN area or an NTN area.

In the embodiment of the present disclosure, the indication information may also be explicit indication information. That is, the network device may send the indication information through a separate signaling to directly indicate the network type to which the area belongs.

For example, the network device provides the area information of multiple network types, and indicates that the network type of area #n is "TN" or "NTN" through a separate signaling.

In a possible implementation, the network device sends the area geographic location information to the terminal.

In another possible implementation, the network device sends the area geographic location information and the area identifier to the terminal.

In another possible implementation, the network device sends the area geographic location information and the indication information to the terminal.

In another possible implementation, the network device sends the area geographic location information, the area identifier and the indication information to the terminal.

In the above embodiment, the network device may send the area information to the terminal, so that the terminal may accurately determine the TN area, and the terminal measures the TN frequency when it is in the TN area, and does not measure the TN frequency when it is outside the TN area, thus effectively reducing the energy consumption of the terminal.

In some alternative embodiments, as shown in Fig. 2, which is a flow chart of an information transmission method according to an embodiment, the information transmission method may be performed by the network device, and the network device includes, but is not limited to, a base station and a core network device in an NTN. The method may include the following steps.

In step 201, association information is sent to a terminal.

In the embodiment of the present disclosure, each area information may be associated with at least one frequency information. The network device may send the association information between the area information and the at least one frequency information to the terminal.

In the above embodiment, the network device may send the association information between the area information and the at least one frequency information to the terminal, so that the terminal may accurately determine the TN area, and the terminal measures the TN frequency when it is in the TN area, and does not measure the TN frequency when it is outside the TN area, thus effectively reducing the energy consumption of the terminal.

In some alternative embodiments, as shown in Fig. 3A, which is a flow chart of an information transmission method according to an embodiment, the information transmission method may be performed by the network device, and the network device includes, but is not limited to, a base station and a core network device in an NTN. The method may include the following steps.

In step 301, a neighbour cell list is sent to a terminal, and each cell contained in the neighbour cell list is associated with at least one area identifier.

In the embodiment of the present disclosure, the area information includes geographic location information and an area identifier. The network device may send the neighbour cell list to the terminal, and the neighbour cell list is the neighbour cell list that has been used in the protocol to perform cell reselection. The neighbour cell list includes, but is not limited to, an intra-frequency neighbour cell list and/or an inter-frequency neighbour cell list. The intra-frequency neighbour cell list may include, but not limited to, a new radio (NR) intra-frequency neighbour cell list, and the inter-frequency neighbour cell list may include, but not limited to, a NR inter-frequency neighbour cell list and the inter-radio access technology (inter-RAT) neighbour cell list.

Each cell contained in the neighbour cell list may be associated with at least one area identifier, as shown in Table 1, for example.

**Table 1**

| Physical cell identifier PCI | Area identifier |
|---|---|
| PCI#1 | Area identifier #1 |
| PCI#2 | Area identifier #1, area identifier #2 |
| PCI#3 | Area identifier #1, area identifier #3 |
| ...... | ...... |

Table 1 is only illustrative, and other contents contained in the neighbour cell list are not shown in Table 1. The network device may reuse the existing neighbour cell list in the protocol and associate each cell in the neighbour cell list with at least one area identifier.

In step 302, a frequency list is sent to the terminal, and each frequency contained in the frequency list is associated with at least one area identifier.

In the embodiment of the present disclosure, the network device may send the frequency list to the terminal, and the frequency list is the existing frequency list in the protocol (including, but not limited to, an intra-frequency list and an inter-frequency list). Each frequency contained in the frequency list may be associated with at least one area identifier, as shown in Table 2, for example.

**Table 2**

| Frequency | Area identifier |
|---|---|
| Frequency #1 | Area identifier #1 |
| Frequency #2 | Area identifier #2 |
| Frequency #3 | Area identifier #1, area identifier #3 |
| ...... | ...... |

Table 2 is only illustrative, and other contents contained in the frequency list are not shown in Table 2. The network device may reuse the existing frequency list in the protocol and associate each frequency in the frequency list with at least one area identifier.

In the embodiment of the present disclosure, the network device may only execute step 301, or only execute step 302, or execute steps 301 and 302, which is not limited by the present disclosure.

In the above embodiment, the network device may send the association information to the terminal by sending the neighbour cell list and/or the frequency list. Specifically, each cell in the neighbour cell list is associated with at least one area identifier, and each frequency in the frequency list is associated with at least one area identifier, thus realizing the purpose of sending the association information to the terminal, and providing high usability.

In some alternative embodiments, as shown in Fig. 3B, which is a flow chart of an information transmission method according to an embodiment, the information transmission method may be performed by the network device, and the network device includes, but is not limited to, a base station and a core network device in an NTN. The method may include the following steps.

In step 301', a neighbour cell list is sent to a terminal, and each designated cell contained in the neighbour cell list is associated with at least one area identifier.

The designated cell is a terrestrial network (TN) cell.

In the embodiment of the present disclosure, the neighbour cell list includes, but is not limited to, an intra-frequency neighbour cell list and/or an inter-frequency neighbour cell list. The intra-frequency neighbour cell list may include, but not limited to, a NR intra-frequency neighbour cell list, and the inter-frequency neighbour cell list may include, but not limited to, a NR inter-frequency neighbour cell list and an inter-RAT neighbour cell list.

In an embodiment of the present disclosure, the neighbour cell list may be shown in Table 3, for example.

**Table 3**

| Physical cell identifier PCI | Area identifier |
|---|---|
| PCI#1(TN cell) | Area identifier #1 |
| PCI#2 | -- |
| PCI#3(TN cell) | Area identifier #1, area identifier #3 |
| ...... | ...... |

Table 3 is only illustrative, and other contents contained in the neighbour cell list are not shown in Table 3. The network device may reuse the existing neighbour cell list in the protocol and associate each designated cell in the neighbour cell list with at least one area identifier.

In step 302', a frequency list is sent to the terminal, and each designated frequency contained in the frequency list is associated with at least one area identifier.

The designated frequency is a frequency applied only to a TN.

In the embodiment of the present disclosure, the network device may send the frequency list to the terminal, the frequency list is the existing frequency list in the protocol (including, but not limited to, an intra-frequency list and an inter-frequency list), and the frequency list may be shown in Table 4, for example.

**Table 4**

| Frequency | Area identifier |
|---|---|
| Frequency #1 (frequency applied only to TN) | Area identifier #1 |
| Frequency #2 | -- |
| Frequency #3 (frequency applied only to TN) | Area identifier #1, area identifier #3 |
| ...... | ...... |

Table 4 is only illustrative, and other contents contained in the frequency list are not shown in Table 4. The network device may reuse the existing frequency list in the protocol and associate each designated frequency in the frequency list with at least one area identifier.

In the embodiment of the present disclosure, the network device may only execute step 301', or only execute step 302', or execute steps 301' and 302', which is not limited by the present disclosure.

In the above embodiment, the network device may send the association information to the terminal by sending the neighbour cell list and/or the frequency list. Specifically, each designated cell in the neighbour cell list is associated with at least one area identifier, and each designated frequency in the frequency list is associated with at least one area identifier, thus realizing the purpose of sending the association information to the terminal, and providing high usability.

In some alternative embodiments, as shown in Fig. 4A, which is a flow chart of an information transmission method according to an embodiment, the information transmission method may be performed by the network device, and the network device includes, but is not limited to, a base station and a core network device in an NTN. The method may include the following steps.

In step 401, a neighbour cell list is sent to a terminal, and each cell contained in the neighbour cell list is associated with first indication information.

In the embodiment of the present disclosure, the first indication information indicates that a network type to which the area belongs is a TN and/or an NTN. When the first indication information is 1, it may indicate that the network type to which the area belongs is the TN, and when the first indication information is 0, it may indicate that the network type to which the area belongs is the NTN.

In the embodiment of the present disclosure, the neighbour cell list includes, but is not limited to, an intra-frequency neighbour cell list and/or an inter-frequency neighbour cell list. The intra-frequency neighbour cell list may include, but not limited to, a NR intra-frequency neighbour cell list, and the inter-frequency neighbour cell list may include, but not limited to, a NR inter-frequency neighbour cell list and an inter-RAT neighbour cell list.

In the embodiment of the present disclosure, the neighbour cell list is shown in Table 5, for example.

**Table 5**

| Physical cell identifier PCI | First indication information |
|---|---|
| PCI#1 | 1 |
| PCI#2 | 1&0 |
| PCI#3 | 1 |
| ...... | ...... |

Table 5 is only illustrative, and other contents contained in the neighbour cell list are not shown in Table 5. The network device may reuse the existing neighbour cell list in the protocol and associate each cell in the neighbour cell list with the first indication information.

In step 402, a frequency list is sent to the terminal, and each frequency contained in the frequency list is associated with first indication information.

In the embodiment of the present disclosure, the first indication information indicates that a network type to which the area belongs is a TN and/or an NTN. When the first indication information is 1, it may indicate that the network type to which the area belongs is the TN, and when the first indication information is 0, it may indicate that the network type to which the area belongs is the NTN.

In the embodiment of the present disclosure, the network device may send the frequency list to the terminal, and the frequency list is the existing frequency list in the protocol (including, but not limited to, an intra-frequency list and an inter-frequency list). The frequency list is shown in Table 6, for example.

**Table 6**

| Frequency | First indication information |
|---|---|
| Frequency #1 | 1 |
| Frequency #2 | 1&0 |
| Frequency #3 | 1 |
| ...... | ...... |

Table 6 is only illustrative, and other contents contained in the frequency list are not shown in Table 6. The network device may reuse the existing frequency list in the protocol and associate each frequency in the frequency list with the first indication information.

In the embodiment of the present disclosure, the network device may only execute step 401, or only execute step 402, or execute steps 401 and 402, which is not limited by the present disclosure.

In the above embodiment, the network device may send the association information to the terminal by sending the neighbour cell list and/or the frequency list. Specifically, each cell in the neighbour cell list is associated with the first indication information, and each frequency in the frequency list is associated with the first indication information, thus realizing the purpose of sending the association information to the terminal, and providing high usability.

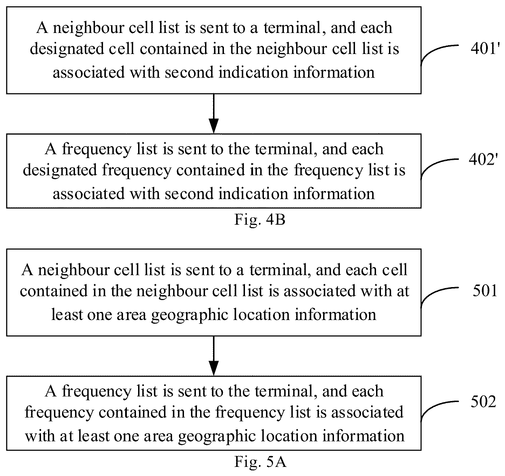

In some alternative embodiments, as shown in Fig. 4B, which is a flow chart of an information transmission method according to an embodiment, the information transmission method may be performed by the network device, and the network device includes, but is not limited to, a base station and a core network device in an NTN. The method may include the following steps.

In step 401', a neighbour cell list is sent to a terminal, and each designated cell contained in the neighbour cell list is associated with second indication information.

In the embodiment of the present disclosure, the designated cell is a TN cell, and the second indication information indicates that a network type to which the area belongs is a TN. The second indication information is 1, which indicates that the network type to which the area belongs is the TN.

In the embodiment of the present disclosure, the neighbour cell list includes, but is not limited to, an intra-frequency neighbour cell list and/or an inter-frequency neighbour cell list. The intra-frequency neighbour cell list may include, but not limited to, a NR intra-frequency neighbour cell list, and the inter-frequency neighbour cell list may include, but not limited to, a NR inter-frequency neighbour cell list and an inter-RAT neighbour cell list.

In the embodiment of the present disclosure, the neighbour cell list is shown in Table 7, for example.

**Table 7**

| Physical cell identifier PCI | Second indication information |
|---|---|
| PCI#1(TN cell) | 1 |
| PCI#2 | -- |
| PCI#3(TN cell) | 1 |
| ...... | ...... |

Table 7 is only illustrative, and other contents contained in the neighbour cell list are not shown in Table 7. The network device may reuse the existing neighbour cell list in the protocol and associate each designated cell in the neighbour cell list with the second indication information.

In step 402', a frequency list is sent to the terminal, and each designated frequency contained in the frequency list is associated with second indication information.

In the embodiment of the present disclosure, the designated frequency is a frequency applied only to a TN, and the second indication information indicates that a network type to which the area belongs is a TN. The second indication information is 1, which indicates that the network type to which the area belongs is the TN.

In the embodiment of the present disclosure, the network device may send the frequency list to the terminal, and the frequency list is the existing frequency list in the protocol (including, but not limited to, an intra-frequency list and an inter-frequency list). The frequency list is shown in Table 8, for example, in which frequency #1 and frequency #2 are applied only to the TN.

**Table 8**

| Frequency | Second indication information |
|---|---|
| Frequency #1 | 1 |
| Frequency #2 | -- |
| Frequency #3 | 1 |
| ...... | ...... |

Table 8 is only illustrative, and other contents contained in the frequency list are not shown in Table 8. The network device may reuse the existing frequency list in the protocol and associate each designated frequency in the frequency list with the second indication information.

In the embodiment of the present disclosure, the network device may only execute step 401', or only execute step 402', or execute steps 401' and 402', which is not limited by the present disclosure.

In the above embodiment, the network device may send the association information to the terminal by sending the neighbour cell list and/or the frequency list. Specifically, each designated cell in the neighbour cell list is associated with the second indication information, and each designated frequency in the frequency list is associated with the second indication information, thus realizing the purpose of sending the association information to the terminal, and providing high usability.

In some alternative embodiments, as shown in Fig. 5A, which is a flow chart of an information transmission method according to an embodiment, the information transmission method may be performed by the network device, and the network device includes, but is not limited to, a base station and a core network device in an NTN. The method may include the following steps.

In step 501, a neighbour cell list is sent to a terminal, and each cell contained in the neighbour cell list is associated with at least one area geographic location information.

In the embodiment of the present disclosure, the neighbour cell list includes, but is not limited to, an intra-frequency neighbour cell list and/or an inter-frequency neighbour cell list. The intra-frequency neighbour cell list may include, but not limited to, a NR intra-frequency neighbour cell list, and the inter-frequency neighbour cell list may include, but not limited to, a NR inter-frequency neighbour cell list and an inter-RAT neighbour cell list.

In the embodiment of the present disclosure, the neighbour cell list is shown in Table 9, for example.

**Table 9**

| Physical cell identifier PCI | Area geographic location information |
|---|---|
| PCI#1 | Area 1 (e.g., center point location #1, radius R1) |
| PCI#2 | Area 2 (e.g., center point location #2, radius R2) |
| PCI#3 | Area 3 (e.g., center point location #3, radius R3) |
| ...... | ...... |

Table 9 is only illustrative, and other contents contained in the neighbour cell list are not shown in Table 9. The network device may reuse the existing neighbour cell list in the protocol, and associate each cell in the neighbour cell list with at least one area geographic location information.

In step 502, a frequency list is sent to the terminal, and each frequency contained in the frequency list is associated with at least one area geographic location information.

In the embodiment of the present disclosure, the network device may send the frequency list to the terminal, and the frequency list is the existing frequency list in the protocol (including, but not limited to, an intra-frequency list and an inter-frequency list). The frequency list is shown in Table 10, for example.

**Table 10**

| Frequency | Area geographic location information |
|---|---|
| Frequency #1 | Area 1 (e.g., center point location #1, radius R1) |
| Frequency #2 | Area 1 (e.g., center point location #1, radius R1); |
| | Area 2 (e.g., center point location #2, radius R2) |
| Frequency #3 | Area 1 (e.g., center point location #1, radius R1); |
| | Area 1 (e.g., center point location #3, radius R3) |
| ...... | ...... |

Table 10 is only illustrative, and other contents contained in the frequency list are not shown in Table 10. The network device may reuse the existing frequency list in the protocol, and associate each frequency in the frequency list with at least one area geographic location information.

In the embodiment of the present disclosure, the network device may only execute step 501, or only execute step 502, or execute steps 501 and 502, which is not limited by the present disclosure.

In the above embodiment, the network device may send the association information to the terminal by sending the neighbour cell list and/or the frequency list. Specifically, each cell in the neighbour cell list is associated with at least one area geographic location information, and each frequency in the frequency list is associated with at least one area geographic location information, thus realizing the purpose of sending the association information to the terminal, and providing high usability.

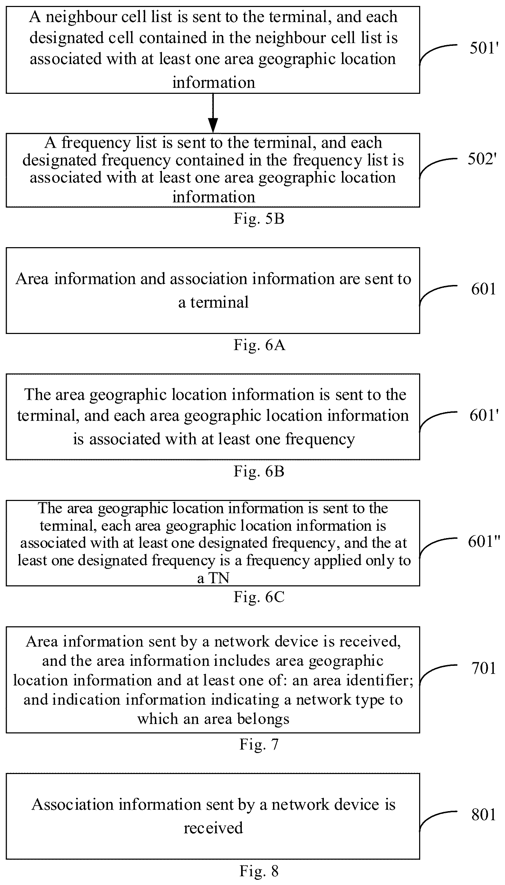

In some alternative embodiments, as shown in Fig. 5B, which is a flow chart of an information transmission method according to an embodiment, the information transmission method may be performed by the network device, and the network device includes, but is not limited to, a base station and a core network device in an NTN. The method may include the following steps.

In step 501', a neighbour cell list is sent to the terminal, and each designated cell contained in the neighbour cell list is associated with at least one area geographic location information.

In the embodiment of the present disclosure, the designated cell is a TN cell.

In the embodiment of the present disclosure, the neighbour cell list includes, but is not limited to, an intra-frequency neighbour cell list and/or an inter-frequency neighbour cell list. The intra-frequency neighbour cell list may include, but not limited to, a NR intra-frequency neighbour cell list, and the inter-frequency neighbour cell list may include, but not limited to, a NR inter-frequency neighbour cell list and an inter-RAT neighbour cell list.

In the embodiment of the present disclosure, the neighbour cell list is shown in Table 11, for example.

**Table 11**

| Physical cell identifier PCI | Area geographic location information |
|---|---|
| PCI#1(TN cell) | Area 1 (e.g., center point location #1, radius R1) |
| PCI#2 | -- |
| PCI#3(TN cell) | Area 1 (e.g., center point location #1, radius R1); |
| | Area 3 (e.g., center point location #3, radius R3) |
| ...... | ...... |

Table 11 is only illustrative, and other contents contained in the neighbour cell list are not shown in Table 11. The network device may reuse the existing neighbour cell list in the protocol, and associate each designated cell in the neighbour cell list with at least one area geographic location information.

In step 502', a frequency list is sent to the terminal, and each designated frequency contained in the frequency list is associated with at least one area geographic location information.

In the embodiment of the present disclosure, the designated frequency is a frequency applied only to a TN.

In the embodiment of the present disclosure, the network device may send the frequency list to the terminal, and the frequency list is the existing frequency list in the protocol (including, but not limited to, an intra-frequency list and an inter-frequency list). The frequency list is shown in Table 12, for example, and frequency #1 and frequency #3 are applied only to the TN.

**Table 12**

| Frequency | Area geographic location information |
|---|---|
| Frequency #1 | Area 1 (e.g., center point location #1, radius R1) |
| Frequency #2 | -- |
| Frequency #3 | Area 1 (e.g., center point location #1, radius R1); |
| | Area 3 (e.g., center point location #3, radius R3) |
| ...... | ...... |

Table 12 is only illustrative, and other contents contained in the frequency list are not shown in Table 12. The network device may reuse the existing frequency list in the protocol, and associate each designated frequency in the frequency list with at least one area geographic location information.

In the embodiment of the present disclosure, the network device may only execute step 501', or only execute step 502', or execute steps 501' and 502', which is not limited by the present disclosure.

In the above embodiment, the network device may send the association information to the terminal by sending the neighbour cell list and/or the frequency list. Specifically, each designated cell in the neighbour cell list is associated with at least one area geographic location information, and each designated frequency in the frequency list is associated with at least one area geographic location information, thus realizing the purpose of sending the association information to the terminal, and providing high usability.

In some alternative embodiments, as shown Fig. 6A, which is a flow chart of an information transmission method according to an embodiment, the information transmission method may be performed by the network device, and the network device includes, but is not limited to, a base station and a core network device in an NTN. The method may include the following steps.

In step 601, area information and association information are sent to a terminal.

In a possible implementation, the network device may send the area information and the association information to the terminal respectively. The way in which the network device sends the area information to the terminal is similar to that in the above step 101, and the way in which the network device sends the association information to the terminal is similar to that in the above Fig. 2, Fig. 3A, Fig. 3B, Fig. 4A, Fig. 4B, Fig. 5A or Fig. 5B, which is not repeated here.

In another possible implementation, the network device may send the association information to the terminal while sending the area information to the terminal. Considering that the area information at least includes area geographic location information, the network device may send at least one frequency associated with each area geographic location information to the terminal while sending the area geographic location information to the terminal.

As shown in Fig. 6B, step 601 may specifically include the following step.

In step 601', the area geographic location information is sent to the terminal, and each area geographic location information is associated with at least one frequency.

The area geographic location information may be sent in the form of a list, as shown in Table 13, for example.

**Table 13**

| Area geographic location information | Frequency |
|---|---|
| Area 1 (e.g., center point location #1, radius R1) | Frequency #1, frequency #2, frequency #3 |
| Area 2 (e.g., center point location #2, radius R2) | Frequency #2 |
| Area 3 (e.g., center point location #3, radius R3) | Frequency #1, frequency #3 |
| ...... | ...... |

For example, the network device may send at least one designated frequency associated with each area geographic location information to the terminal while sending the area geographic location information to the terminal.

As shown in Fig. 6C, step 601 may specifically include the following step.

In step 601", the area geographic location information is sent to the terminal, each area geographic location information is associated with at least one designated frequency, and the at least one designated frequency is a frequency applied only to a TN.

In the embodiment of the present disclosure, the designated frequency is the frequency applied only to the TN.

Area geographic location information may be sent in the form of a list, as shown in Table 14, for example. The frequencies #1 and #3 are applied only to TN networks.

**Table 14**

| Area geographic location information | frequency |
|---|---|
| Area 1 (e.g., center point location #1, radius R1) | Frequency #1 |
| Area 3 (e.g., center point location #3, radius R3) | Frequency #1, frequency #3 |
| ...... | ...... |

In the above embodiment, the network device may send the area information and the association information to the terminal by sending the area geographic location information, which is simple and convenient to realize, and provides high usability. Next, the information transmission method provided by the present disclosure will be introduced from the side of the terminal.

An embodiment of the present disclosure provides an information transmission method, as shown in Fig. 7, which is a flow chart of an information transmission method according to an embodiment, the information transmission method may be performed by the terminal, and the method may include the following steps.

In step 701, area information sent by a network device is received.

In the embodiment of the present disclosure, the area information includes area geographic location information and at least one of: an area identifier; and indication information indicating a network type to which an area belongs.

The area information here may be area information of a TN area.

In a possible implementation, the area geographic location information may include geographic location information of a center point of each area and a radius of each area.

The terminal may take the center point as a center of a circle, determine a circular area with the corresponding radius, and determine the circular area as an area, which may be a TN area.

In another possible implementation, the area geographic location information may include geographic location information of a plurality of location points located on a boundary of each area.

The terminal may connect the plurality of location points through a straight line to obtain an area, and determine the obtained area as the area, which may be the TN area.

The above description is only illustrative, and the area geographic location information may include other information for determining a geographic location of the area, which is not limited by the present disclosure.

In a possible implementation, the area identifier is information used to identify each area. For example, the network device may assign an area identifier to each area, and the area identifier may be sequentially increased from 0 or 1.

In a possible implementation, the indication information is implicit indication information. That is, the network device will not send the indication information through a separate signaling, but may send the indication information implicitly while sending other information, and the terminal will determine the content of the indication information.

For example, the network device only provides the area information of one network type, and the network type is a TN, which is agreed upon by protocol. That is, there is no separate signaling to indicate whether the area is the TN area or an NTN area.

In a possible implementation, the terminal receives the area geographic location information sent by the network device.

In another possible implementation, the terminal receives the area geographic location information and the area identifier sent by the network device.

In another possible implementation, the terminal receives the area geographic location information and the indication information sent by the network device.

In another possible implementation, the terminal receives the area geographic location information, the area identifier and the indication information sent by the network device.

In the above embodiment, the terminal may receive the area information sent by the network device, so that the terminal may accurately determine the TN area, and the terminal measures the TN frequency when it is in the TN area, and does not measure the TN frequency when it is outside the TN area, thus effectively reducing the energy consumption of the terminal.

In some alternative embodiments, as shown in Fig. 8, which is a flow chart of an information transmission method according to an embodiment, the information transmission method may be performed by the terminal, and the method may include the following steps.

In step 801, association information sent by a network device is received.

In an embodiment of the present disclosure, each area information may be associated with at least one frequency information. The terminal may receive the association information between the at least one frequency information and the area information sent by the network device.

In the above embodiment, the terminal may receive the association information between the frequency information and the area information sent by the network device, so that the terminal may accurately determine the TN area, and the terminal measures the TN frequency when it is in the TN area, and does not measure the TN frequency when it is outside the TN area, thus effectively reducing the energy consumption of the terminal.

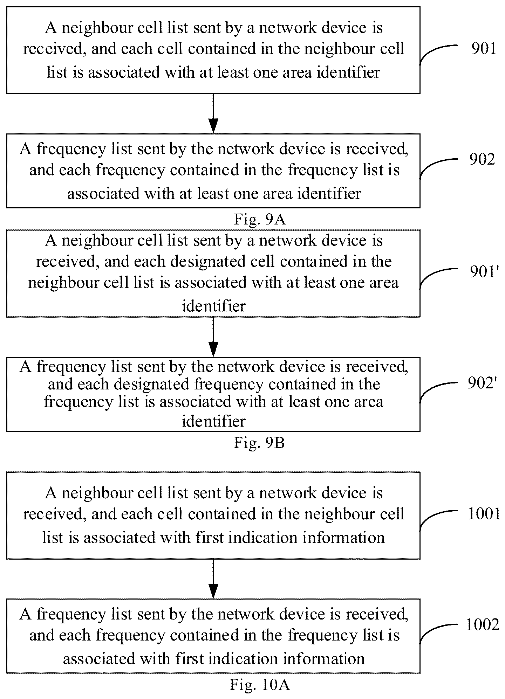

In some alternative embodiments, as shown in Fig. 9A, which is a flow chart of an information transmission method according to an embodiment, the information transmission method may be performed by the terminal, and the method may include the following steps.

In step 901, a neighbour cell list sent by a network device is received, and each cell contained in the neighbour cell list is associated with at least one area identifier.

In the embodiment of the present disclosure, the area information includes geographic location information and the area identifier.

The network device may send the neighbour cell list to the terminal, and the neighbour cell list is the neighbour cell list that has been used in the protocol to perform cell reselection. Each cell contained in the neighbour cell list may be associated with at least one area identifier, as shown in Table 1 above.

In step 902, a frequency list sent by the network device is received, and each frequency contained in the frequency list is associated with at least one area identifier.

In the embodiment of the present disclosure, the terminal may receive the frequency list sent by the network device, and the frequency list is the existing frequency list in the protocol (including, but not limited to, an intra-frequency list and an inter-frequency list). Each frequency contained in the frequency list may be associated with at least one area identifier, as shown in Table 2 above.

In the embodiment of the present disclosure, the terminal may only execute step 901, or only execute step 902, or execute steps 901 and 902, which is not limited by the present disclosure.

For the terminal, when the terminal is in one of areas indicated by the area information, according to a frequency and/or a cell associated with the area identifier, it is determined to measure the frequency and/or the cell. Alternatively, when the terminal is outside areas indicated by the area information, according to a frequency associated with the area identifier, it is determined not to measure the frequency and/or the cell.

In the above embodiment, the terminal may receive the association information sent by the network device through the neighbour cell list and/or the frequency list. Specifically, each cell in the neighbour cell list is associated with at least one area identifier, and each frequency in the frequency list is associated with at least one area identifier. Further, it is determined whether to measure the frequency and/or the cell based on the area information and the association information, which is simple and convenient to realize, and provides high usability.

In some alternative embodiments, as shown in Fig. 9B, which is a flow chart of an information transmission method according to an embodiment, the information transmission method may be performed by a terminal, and the method may include the following steps.

In step 901', a neighbour cell list sent by a network device is received, and each designated cell contained in the neighbour cell list is associated with at least one area identifier.

The designated cell is a terrestrial network (TN) cell.

In the embodiment of the present disclosure, the neighbour cell list may be shown in Table 3 above, for example.

In step 902', a frequency list sent by the network device is received, and each designated frequency contained in the frequency list is associated with at least one area identifier.

The designated frequency is a frequency applied only to the TN.

In an embodiment of the present disclosure, the frequency list may be shown in Table 4 above, for example.

In the embodiment of the present disclosure, the terminal may only execute step 901', or only execute step 902', or execute step 901' and step 902', which is not limited by the present disclosure.

For the terminal, when the terminal is in one of areas indicated by the area information, according to a frequency and/or a cell associated with the area identifier, it is determined to measure the frequency and/or the cell. Alternatively, when the terminal is outside areas indicated by the area information, according to a frequency and/or a cell associated with the area identifier, it is determined not to measure the frequency and/or the cell.

In the above embodiment, the terminal may receive the association information sent by the network device through the neighbour cell list and/or the frequency list, and then determine whether to measure the frequency and/or the cell based on the area information and the association information, which is simple and convenient to realize, and provides high usability.

In some alternative embodiments, as shown in Fig. 10A, which is a flow chart of an information transmission method according to an embodiment, the information transmission method may be performed by the terminal, and the method may include the following steps.

In step 1001, a neighbour cell list sent by a network device is received, and each cell contained in the neighbour cell list is associated with first indication information.

In the embodiment of the present disclosure, the first indication information indicates that a network type to which the area belongs is a TN and/or an NTN. When the first indication information is 1, it may indicate that the network type to which the area belongs is the TN, and when the first indication information is 0, it may indicate that the network type to which the area belongs is the NTN.

In the embodiment of the present disclosure, the neighbour cell list is shown in Table 5 above, for example.

In step 1002, a frequency list sent by the network device is received, and each frequency contained in the frequency list is associated with first indication information.

In the embodiment of the present disclosure, the first indication information indicates that the network type to which the area belongs is the TN and/or the NTN. When the first indication information is 1, it may indicate that the network type to which the area belongs is the TN, and when the first indication information is 0, it may indicate that the network type to which the area belongs is the NTN.

In the embodiment of the present disclosure, the frequency list is shown in Table 6 above, for example.

In the embodiment of the present disclosure, the terminal may only execute step 1001, or only execute step 1002, or execute steps 1001 and 1002, which is not limited by the present disclosure.

For the terminal, when the terminal is in one of areas indicated by the area information, and the indication information corresponding to the area indicates that the network type is the TN, according to a frequency and/or a cell associated with the indication information, it is determined to measure the frequency and/or the cell are. Alternatively, when the terminal is outside areas indicated by the area information, and the indication information corresponding to the area indicates that the network type is the TN, according to a frequency and/or a cell associated with the indication information, it is determined not to measure the frequency and/or the cell.

In the above embodiment, the terminal may receive the association information sent by the network device through the neighbour cell list and/or the frequency list, and then determine whether to measure the frequency and/or the cell based on the area information and the association information, which is simple and convenient to realize, and provides high usability.

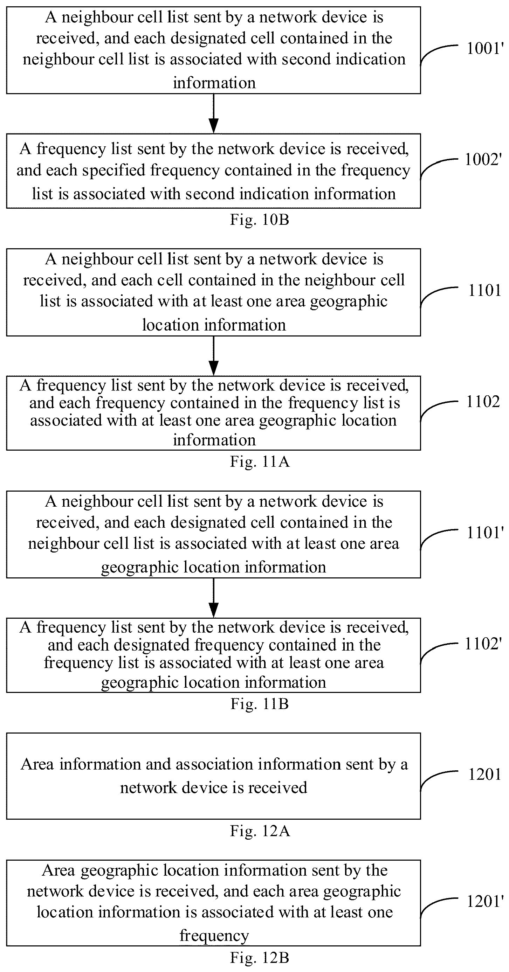

In some alternative embodiments, as shown in Fig. 10B, which is a flow chart of an information transmission method according to an embodiment, the information transmission method may be performed by a terminal, and the method may include the following steps.

In step 1001', a neighbour cell list sent by a network device is received, and each designated cell contained in the neighbour cell list is associated with second indication information.

In the embodiment of the present disclosure, the designated cell is a TN cell, and the second indication information indicates that a network type to which the area belongs is a TN. The second indication information is 1, which indicates that the network type to which the area belongs is the TN.

In the embodiment of the present disclosure, the neighbour cell list is shown in Table 7 above, for example.

In step 1002', a frequency list sent by the network device is received, and each designated frequency contained in the frequency list is associated with second indication information.

In the embodiment of the present disclosure, the designated frequency is a frequency applied only to a TN, and the second indication information indicates that a network type to which the area belongs is the TN. The second indication information is 1, which indicates that the network type to which the area belongs is the TN.

In the embodiment of the present disclosure, the frequency list is shown in Table 8 above, for example.

In the embodiment of the present disclosure, the terminal may only execute step 1001', or only execute step 1002', or execute steps 1001' and 1002', which is not limited by the present disclosure.

For the terminal, when the terminal is in one of areas indicated by the area information, and the indication information corresponding to the area indicates that the network type is the TN, according to a frequency and/or a cell associated with the indication information, it is determined to measure the frequency and/or the cell. Alternatively, when the terminal is outside areas indicated by the area information, and the indication information corresponding to the area indicates that the network type is the TN, according to a frequency and/or a cell associated with the indication information, it is determined not to measure the frequency and/or the cell.

In the above embodiment, the terminal may receive the association information sent by the network device through the neighbour cell list and/or the frequency list, and then determine whether to measure the frequency and/or the cell based on the area information and the association information, which is simple and convenient to realize, and provides high usability.

In some alternative embodiments, as shown in Fig. 11A, which is a flow chart of an information transmission method according to an embodiment, the information transmission method may be performed by the terminal, and the method may include the following steps.

In step 1101, a neighbour cell list sent by a network device is received, and each cell contained in the neighbour cell list is associated with at least one area geographic location information.

In the embodiment of the present disclosure, the neighbour cell list is shown in Table 9, for example.

In step 1102, a frequency list sent by the network device is received, and each frequency contained in the frequency list is associated with at least one area geographic location information.

In the embodiment of the present disclosure, the frequency list is shown in Table 10, for example.

In the embodiment of the present disclosure, the terminal may only execute step 1101, or only execute step 1102, or execute steps 1101 and 1102, which is not limited by the present disclosure.

For the terminal, when the terminal is in one of areas indicated by the area information, according to a frequency and/or a cell associated with the area geographic location information, it is determined to measure the frequency and/or cell. Alternatively, when the terminal is outside areas indicated by the area information, according to a frequency and/or a cell associated with the area geographic location information, it is determined not to measure the frequency and/or the cell.

In the above embodiment, the terminal may receive the association information sent by the network device through the neighbour cell list and/or the frequency list, and then determine whether to measure the frequency and/or the cell based on the area information and the association information, which is simple and convenient to realize, and provides high usability.

In some alternative embodiments, as shown in Fig. 11B, which is a flow chart of an information transmission method according to an embodiment, the information transmission method may be performed by the terminal, and the method may include the following steps.

In step 1101', a neighbour cell list sent by a network device is received, and each designated cell contained in the neighbour cell list is associated with at least one area geographic location information.

In this embodiment of the present disclosure, the designated cell is a TN cell, and the neighbour cell list is shown in Table 11 above, for example.

In step 1102', a frequency list sent by the network device is received, and each designated frequency contained in the frequency list is associated with at least one area geographic location information.

In the embodiment of the present disclosure, the designated frequency is a frequency applied only to a TN.

In the embodiment of the present disclosure, the frequency list is shown in Table 12 above, for example.

In the embodiment of the present disclosure, the terminal may only execute step 1101', only execute step 1102', or execute step 1101' and step 1102', which is not limited by the present disclosure.

For the terminal, when the terminal is in one of areas indicated by the area information, according to a frequency and/or a cell associated with the area geographic location information, it is determined to measure the frequency and/or cell. Alternatively, when the terminal is outside areas indicated by the area information, according to a frequency and/or a cell associated with the area geographic location information, it is determined not to measure the frequency and/or the cell.

In the above embodiment, the terminal may receive the area information and the association information sent by the network device through the neighbour cell list, and then determine whether to measure the frequency and/or the cell based on the area information and the association information, which is simple and convenient to realize, and provides high usability.

In some alternative embodiments, as shown in Fig. 12A, which is a flow chart of an information transmission method according to an embodiment, the information transmission method may be performed by the terminal, and the method may include the following steps.

In step 1201, area information and association information sent by a network device is received.

In a possible implementation, the terminal may receive the area information and the association information respectively sent by the network device. The way in which the terminal receives the area information is similar to that in the above step 701, and the way in which the terminal receives the association information is similar to that in the above Fig. 8, Fig. 9A, Fig. 9B, Fig. 10A, Fig. 10B, Fig. 11A or Fig. 12B, which is not repeated here.

In another possible implementation, the terminal may simultaneously receive the area information and the association information sent by the network device. Considering that the area information at least includes the area geographic location information, the terminal may receive at least one frequency associated with each area geographic location information while receiving the area geographic location information.

As shown in Fig. 12B, step 1201 may specifically include the following steps.

In step 1201', area geographic location information sent by the network device is received, and each area geographic location information is associated with at least one frequency.

The area geographic location information may be sent in the form of a list, as shown in Table 13 above, for example.

For the terminal, when the terminal is in one of areas indicated by the area information, according to the frequency associated with the area geographic location information, it is determined to measure the frequency. Alternatively, when the terminal is outside areas indicated by the area information, according to the frequency associated with the area geographic location information, it is determined not to measure the frequency.

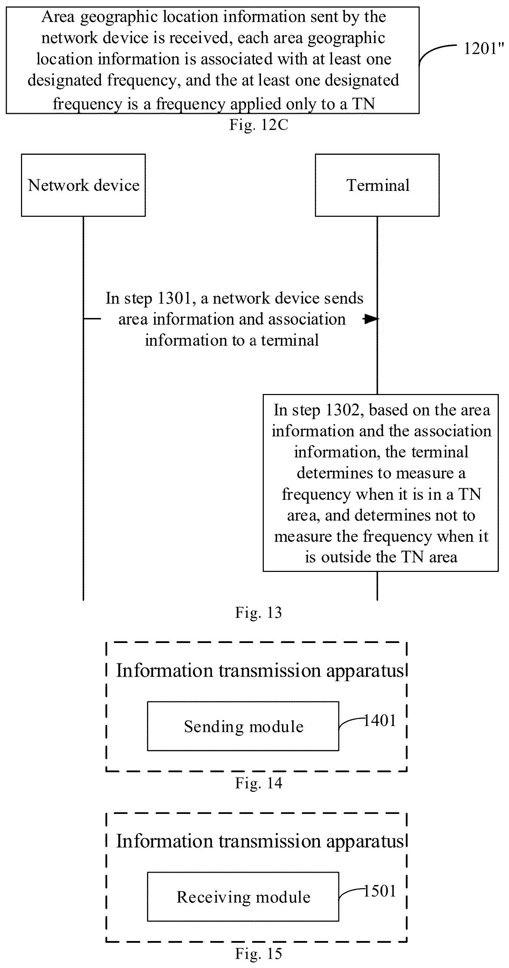

Alternatively, as shown in Fig. 12C, step 1201 may specifically include the following steps.

In step 1201", area geographic location information sent by the network device is received, each area geographic location information is associated with at least one designated frequency, and the at least one designated frequency is a frequency applied only to a TN.

The area geographic location information may be sent in the form of a list, as shown in Table 14 above.

For the terminal, when the terminal is in one of areas indicated by the area information, according to the frequency associated with the area geographic location information, it is determined to measure the frequency. Alternatively, when the terminal is outside areas indicated by the area information, according to the frequency associated with the area geographic location information, it is determined not to measure the frequency.

In the above embodiment, the terminal may receive the area geographic location information and the association frequency sent by the network device, and then determine whether to measure the frequency based on the area geographic location information and the associated frequency, which is simple and convenient to realize, and provides high usability.

In some alternative embodiments, as shown in Fig. 13, which is a flow chart of an information transmission method according to an embodiment, and the information transmission method may include the following steps. In step 1301, a network device sends area information and association information to a terminal.

In the embodiment of the present disclosure, the area information includes area geographic location information and at least one of: an area identifier; and indication information indicating a network type to which an area belongs.

The area information here may be area information of a TN area.

The network device may send the association information, or the area information and the association information to the terminal in any one of the above ways of Table 1 to Table 14, which is not limited by the present disclosure.

In step 1302, based on the area information and the association information, the terminal determines to measure a frequency when it is in a TN area, and determines not to measure the frequency when it is outside the TN area.

Specifically, when the terminal is in one of areas indicated by the area information, according to a frequency and/or a cell associated with the area identifier, it is determined to measure the frequency and/or the cell. Alternatively, when the terminal is outside areas indicated by the area information, according to a frequency and/or a cell associated with the area identifier, it is determined not to measure the frequency and/or the cell.

Specifically, when the terminal is in one of the areas indicated by the area information, and the indication information corresponding to the area indicates that the network type is a TN, it is determined to measure the frequency and/or the cell according to the frequency and/or the cell associated with the indication information. Alternatively, when the terminal is outside the areas indicated by the area information, and the indication information corresponding to the area indicates that the network type is the TN, it is determined not to measure the frequency and/or the cell according to the frequency and/or the cell associated with the indication information.

Specifically, when the terminal is in one of the areas indicated by the area information, it is determined to measure the frequency according to the frequency associated with the area geographic location information. Alternatively, when the terminal is outside the areas indicated by the area information, it is determined not to measure the frequency according to the frequency associated with the area geographic location information.

In the above embodiment, the network device may send the area information to the terminal, so that the terminal may accurately determine the TN area based on the area information, and the terminal measures the TN frequency and/or the TN cell when it is in the TN area, and does not measure the TN frequency and/or the TN cell when it is outside the TN area, thus effectively reducing the energy consumption of the terminal.

Corresponding to the aforementioned embodiments of applying functions to realize the methods, the present disclosure also provides embodiments of applying functions to realize apparatuses.

As shown in Fig. 14, which is a block diagram of an information transmission apparatus according to an illustrative embodiment, the apparatus is applied to a base station and includes:
a sending module 1401 configured to send area information to a terminal, in which the area information includes area geographic location information and at least one of:
an area identifier; and
indication information indicating a network type to which an area belongs.

As shown in Fig. 15, which is a block diagram of an information transmission apparatus according to an illustrative embodiment, the apparatus is applied to a terminal and includes:
a receiving module 1501 configured to receive area information sent by a network device, in which the area information includes area geographic location information and at least one of:
an area identifier; and
indication information indicating a network type to which an area belongs.

For the embodiments of the apparatuses, since they basically correspond to the embodiments of the method, reference may be made to part of the descriptions of the embodiments of the methods for the relevant points. The embodiments of the apparatuses described above are only schematic, the units described above as separate components may or may not be physically separated, and the components displayed as units may or may not be physical units, that is, they may be located in one place or distributed to multiple network units. Some or all of the modules may be selected according to actual needs to achieve the purpose of the scheme in the present disclosure. Those ordinary skilled in the related art may understand and implement them without creative labor.

Correspondingly, the present disclosure also provides a computer-readable storage medium, which stores a computer program, and the computer program is configured to perform any of the information transmission methods for the terminal.

Correspondingly, the present disclosure also provides a computer-readable storage medium, which stores a computer program, and the computer program is configured to perform any of the information transmission methods for the network device.

Correspondingly, the present disclosure also provides an information transmission apparatus, including:
a processor; and
a memory for storing instructions executable by the processor.

The processor is configured to perform any of the information transmission methods at the side of the terminal.

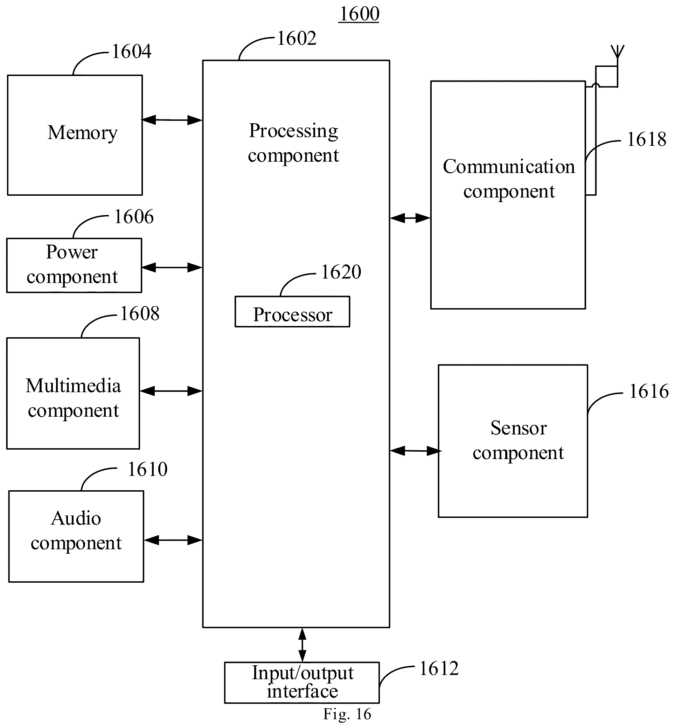

Fig. 16 is a block diagram of an information transmission apparatus 1600 according to an illustrative embodiment. For example, the apparatus 1600 may be a mobile phone, a tablet computer, an e-book reader, a multimedia playing device, a wearable device, a vehicle-mounted user device, an iPad, a smart TV and other terminals.

As shown in Fig. 16, the apparatus 1600 may include one or more of: a processing component 1602, a memory 1604, a power component 1606, a multimedia component 1608, an audio component 1610, an input/output (I/O) interface 1612, a sensor component 1616, and a communication component 1618.

The processing component 1602 generally controls the overall operation of the apparatus 1600, such as operations associated with display, telephone call, data random access, camera operation and recording operation. The processing component 1602 may include one or more processors 1620 to execute instructions to complete all or part of the steps of the information transmission methods described above. In addition, the processing component 1602 may include one or more modules to facilitate interaction between the processing component 1602 and other components. For example, the processing component 1602 may include a multimedia module to facilitate interaction between the multimedia component 1608 and the processing component 1602. As another example, the processing component 1602 may read the executable instructions from the memory to realize the steps of the information transmission methods provided by the above embodiments.

The memory 1604 is configured to store various types of data to support operations at the apparatus 1600. Examples of these data include instructions for any application or method operating on the apparatus 1600, contact data, phone book data, messages, pictures, videos, and the like. The memory 1604 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1606 provides power to various components of the apparatus 1600. The power component 1606 may include a power management system, one or more power supplies, and other components associated with generating, managing and distributing power for the apparatus 1600.

The multimedia component 1608 includes a display screen that provides an output interface between the apparatus 1600 and the user. In some embodiments, the multimedia component 1608 includes a front camera and/or a rear camera. When the apparatus 1600 is in an operation mode, such as a shooting mode or a video mode, the front camera and/or the rear camera may receive external multimedia data. Each of the front camera and the rear camera may be a fixed optical lens system or have a focal length and an optical zoom capability.

The audio component 1610 is configured to output and/or input audio signals. For example, the audio component 1610 includes a microphone (MIC) configured to receive external audio signals when the apparatus 1600 is in operation modes, such as a call mode, a recording mode and a voice recognition mode. The received audio signal may be further stored in the memory 1604 or transmitted via the communication component 1618. In some embodiments, the audio component 1610 further includes a speaker for outputting audio signals.

The I/O interface 1612 provides an interface between the processing component 1602 and peripheral interface modules, which may be a keyboard, a click wheel, a button, etc. The button may include, but is not limited to, a home button, a volume button, a start button and a lock button.

The sensor component 1616 includes one or more sensors for providing various aspects of state evaluation for the apparatus 1600. For example, the sensor component 1616 may detect the on/off state of the apparatus 1600, the relative positioning of components, such as the display and keypad of the apparatus 1600, the position change of the apparatus 1600 or a component of the apparatus 1600, the presence or absence of contact of the user with the apparatus 1600, the orientation or acceleration/deceleration of the apparatus 1600 and the temperature change of the apparatus 1600. The sensor component 1616 may include a proximity sensor configured to detect the presence of a nearby object without any physical contact. The sensor component 1616 may also include an optical sensor, such as a CMOS or CCD image sensor, for use in imaging applications. In some embodiments, the sensor component 1616 may further include an acceleration sensor, a gyro sensor, a magnetic sensor, a pressure sensor or a temperature sensor.

The communication component 1618 is configured to facilitate wired or wireless communication between the apparatus 1600 and other apparatuses. The apparatus 1600 may access a wireless network based on communication standards, such as Wi-Fi, 2G, 3G, 4G, 5G or 6G, or a combination thereof. In an illustrative embodiment, the communication component 1618 receives a broadcast signal or broadcast related information from an external broadcast management system via a broadcast channel. In an illustrative embodiment, the communication component 1618 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an illustrative embodiment, the apparatus 1600 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, for executing any of the information transmission methods described above at the side of the terminal.

In an illustrative embodiment, there is also provided a non-transitory machine-readable storage medium including instructions, such as the memory 1604 including instructions, which may be executed by the processor 1620 of the apparatus 1600 to complete the above information transmission methods. For example, the non-transitory computer-readable storage medium may be a ROM, a random access memory (RAM), a CD-ROM, a magnetic tape, a floppy disk, an optical data storage device, etc.

Correspondingly, the present disclosure also provides an information transmission apparatus, including:
a processor; and
a memory for storing instructions executable by the processor.

The processor is configured to execute any of the information transmission methods described above at the side of the network device.

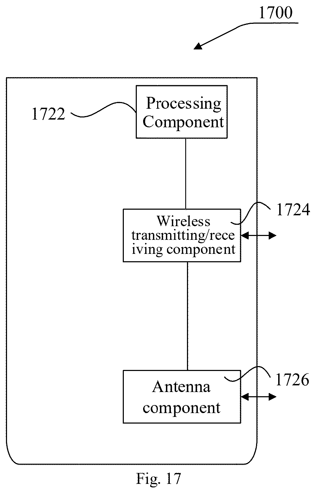

As shown in Fig. 17, which is a schematic diagram of an information transmission apparatus 1700 according to an illustrative embodiment, the apparatus 1700 may be provided as a network device. Referring to Fig. 17, the apparatus 1700 includes a processing component 1722, a wireless transmitting/receiving component 1724, an antenna component 1726, and a signal processing part unique to a wireless interface, and the processing component 1722 may further include at least one processor.

One of the processors in the processing component 1722 may be configured to perform any of the information transmission methods described above at the side of the network device.

Other embodiments of the present disclosure will easily occur to those skilled in the art after considering the specification and practicing the invention disclosed herein. The present disclosure is intended to cover any variations, uses or adaptations of the present disclosure, which follow the general principles of the present disclosure and include common sense or common technical means in the related art that are not disclosed in the present disclosure. The specification and examples are to be regarded as illustrative only, with the true scope and spirit of the present disclosure being indicated by the following claims.

It should be understood that the present disclosure is not limited to the precise structure described above and shown in the drawings, and various modifications and changes may be made without departing from the scope of the present disclosure. The scope of the present disclosure is limited only by the appended claims.

## Claims

1. An information transmission method, performed by a network device, and comprising:
sending area information to a terminal, wherein the area information comprises area geographic location information and at least one of:
an area identifier; or
indication information indicating a network type to which an area belongs.

2. The method according to claim 1, wherein the indication information is implicit indication information.

3. The method according to claim 1 or 2, wherein each area information is associated with at least one frequency information.

4. The method according to claim 3, further comprising:
sending association information between the area information and the at least one frequency information to the terminal.

5. The method according to claim 4, wherein sending the association information to the terminal comprises:
sending a neighbour cell list to the terminal, wherein each cell contained in the neighbour cell list is associated with any one of the area information; and/or
sending a frequency list to the terminal, wherein each frequency contained in the frequency list is associated with any one of the area information.

6. The method according to claim 4, wherein sending the association information to the terminal comprises:
sending a neighbour cell list to the terminal, wherein each designated cell contained in the neighbour cell list is associated with any one of the area information, and the designated cell is a terrestrial network (TN) cell; and/or
sending a frequency list to the terminal, wherein each designated frequency contained in the frequency list is associated with any one of the area information, and the designated frequency is a frequency applied only to a TN.

7. The method according to claim 4, wherein sending the area information and the association information to the terminal comprises:
sending the area geographic location information to the terminal, wherein each area geographic location information is associated with at least one frequency; or
sending the area geographic location information to the terminal, wherein each area geographic location information is associated with at least one designated frequency, and the at least one designated frequency is a frequency applied only to a TN.

8. An information transmission method, performed by a terminal, and comprising:
receiving area information sent by a network device, wherein the area information comprises area geographic location information and at least one of:
an area identifier; or
indication information indicating a network type to which an area belongs.

9. The method according to claim 8, wherein the indication information is implicit indication information.

10. The method according to claim 8 or 9, wherein each area information is associated with at least one frequency information.

11. The method according to claim 10, further comprising:
receiving association information between the at least one frequency information and the area information sent by the network device.

12. The method according to claim 11, wherein receiving the association information sent by the network device comprises:
receiving a neighbour cell list sent by the network device, wherein each cell contained in the neighbour cell list is associated with any one of the area information; and/or
receiving a frequency list sent by the network device, wherein each frequency contained in the frequency list is associated with any one of the area information.

13. The method according to claim 11, wherein receiving the association information sent by the network device comprises:
receiving a neighbour cell list sent by the network device, wherein each designated cell contained in the neighbour cell list is associated with any one of the area information, and the designated cell is a terrestrial network (TN) cell; and/or
receiving a frequency list sent by the network device, wherein each designated frequency contained in the frequency list is associated with any one of the area information, and the designated frequency is a frequency applied only to a TN.

14. The method according to claim 11, wherein receiving the area information and the association information sent by the network device comprises:
receiving the area geographic location information sent by the network device, wherein each area geographic location information is associated with at least one frequency; or
receiving the area geographic location information sent by the network device, wherein each area geographic location information is associated with at least one designated frequency, and the designated frequency is a frequency applied only to a TN.

15. The method according to claim 11, further comprising:
in a case that the terminal is in one of areas indicated by the area information, according to a frequency and/or a cell associated with the area identifier, determining to measure the frequency and/or the cell; or
in a case that the terminal is outside areas indicated by the area information, according to a frequency and/or a cell associated with the area identifier, determining not to measure the frequency and/or the cell.

16. The method according to claim 11, further comprising:
in a case that the terminal is in one of areas indicated by the area information, and the indication information corresponding to the area indicates that the network type is a TN, according to a frequency and/or a cell associated with the indication information, determining to measure the frequency and/or the cell; or
in a case that the terminal is outside areas indicated by the area information, and the indication information corresponding to the area indicates the network type a TN, according to a frequency and/or a cell associated with the indication information, determining not to measure the frequency and/or the cell.

17. The method according to claim 11, further comprising:
in a case that the terminal is in one of areas indicated by the area information, according to a frequency associated with the area geographic location information, determining to measure the frequency; or
in a case that the terminal is outside areas indicated by the area information, according to a frequency associated with the area geographic location information, determining not to measure the frequency.

18. An information transmission apparatus, applied to a base station, and comprising:
a sending module configured to send area information to a terminal, wherein the area information comprises area geographic location information and at least one of:
an area identifier; or
indication information indicating a network type to which an area belongs.

19. An information transmission apparatus, applied to a terminal, and comprising:
a receiving module configured to receive area information sent by a network device, wherein the area information comprises area geographic location information and at least one of:
an area identifier; or
indication information indicating a network type to which an area belongs.

20. A computer-readable storage medium, storing a computer program for performing the information transmission method according to any one of claims 1-7.

21. A computer-readable storage medium, storing a computer program for performing the information transmission method according to any one of claims 8-17.

22. An information transmission apparatus, comprising:
a processor; and
a memory for storing instructions executable by the processor,
wherein the processor is configured to perform the information transmission method according to any one of claims 1-7.

23. An information transmission apparatus, comprising:
a processor; and
a memory for storing instructions executable by the processor,
wherein the processor is configured to perform the information transmission method according to any one of claims 8-17.
